# EUROPEAN PATENT SPECIFICATION

(11) **EP 2 938 492 B1**
(45) Date of publication and mention of the grant of the patent: **24.07.2019**
(21) Application number: 13867640.8
(22) Date of filing: 25.12.2013
(51) Int. Cl.: B32B 27/32, B29C 45/14, C23C 4/08, C23C 4/18, C23C 4/02, B32B 15/085, B32B 15/088, B32B 15/09, B32B 15/18, B32B 27/20, B32B 38/10

(54) **STAINLESS STEEL-RESIN COMPOSITE AND METHOD OF PREPARING THE SAME**
EDELSTAHL-HARZ-VERBUNDSTOFF UND VERFAHREN ZUR HERSTELLUNG DAVON
COMPOSITE ACIER INOXYDABLE-RÉSINE ET SON PROCÉDÉ DE PRÉPARATION

(30) Priority: 28.12.2012 CN 201210581996
(43) Date of publication of application: 04.11.2015
(73) Proprietor: BYD Company Limited, Shenzhen, Guangdong 518118 (CN)
(72) Inventor: ZHANG, Xiao, Shenzhen, Guangdong 518118 (CN); CHENG, Yun, Shenzhen, Guangdong 518118 (CN); GUO, Qiang, Shenzhen, Guangdong 518118 (CN)
(74) Representative: Gulde & Partner
(86) International application number: PCT/CN2013/090471
(87) International publication number: WO 2014/101778

(56) References cited:
- EP-A1- 2 174 766
- EP-A1- 2 500 156
- CN-A- 102 371 679
- CN-A- 102 442 028
- CN-A- 102 672 878
- CN-A- 102 776 466
- JP-A- 2002 225 164
- US-A- 3 010 843
- US-A1- 2004 229 031
- US-A1- 2012 043 689
- US-A1- 2012 094 108

## Description

### FIELD

The present disclosure relates to a stainless steel-resin composite and method of preparing the same.

### BACKGROUND

The statements in this section merely provide background information related to the present disclosure and may not constitute prior art.

In fields of vehicles, household electrical appliances, industrial machines and so on, there is an actual requirement for integrating a metal with a resin composition. Currently, the metal and the resin composition are normally integrated by an adhesion agent at room temperature or with heat treatment. However, metal-resin composites formed with the adhesion agent may have a poor adhesion force between the metal and the resin composition. In addition, a subsequent surface treatment such as anodic oxidation might not be carried out, because the adhesion agent between the metal and the resin composition has poor acid resistance and alkali resistance.

Currently, a stainless steel-resin composite may be formed by steps of: corroding a stainless steel substrate with an acid etching solution so as to form an ultra micro concave-convex structure in the surface of the stainless steel substrate; and injecting a resin composition to the surface of the stainless steel substrate to combine the stainless steel substrate with the resin composition. Due to seriously corrosion of the acid etching solution to the stainless steel substrate, the thickness of the stainless steel substrate may be thinned, which may influence the structure stability of the stainless steel-resin composite. Moreover, the acid etching solution may also corrode a non-injected area of the stainless steel substrate (surface of the stainless steel substrate which doesn't need to be to be injected with the resin composition), especially, an area which will be an appearance surface of the stainless steel-resin composite. Therefore, these areas may need to be subsequently treated with polishing or CNC machining or other subsequent treatment. Thus, the process for manufacturing a stainless steel-resin composite may become complicated, which may be a barrier for widely using the stainless steel-resin composite. Especially, the adhesive force between the between the stainless steel and the resin is not high enough and is required to be improved.

Document JP 2002-225164 A describes such a method of preparing a stainless steel-resin composite, as well as the composite itself.

### SUMMARY

The present disclosure seeks to solve at least one of the problems existing in the prior art to at least some extent.

To this end, a first aspect of the present disclosure is to provide a method of preparing a stainless steel-resin composite. The method may comprise steps of: providing a stainless steel substrate; spraying aluminum particles onto a first surface of the stainless steel substrate via thermal spraying to form an aluminum layer on the first surface of the stainless steel substrate; removing the aluminum layer via dipping the stainless steel substrate into an alkaline solution with a pH value greater than or equal to 10 so as to form a porous surface; and injecting a resin composition onto the porous surface of the stainless steel substrate to form a resin layer.

A second aspect of the present disclosure is to provide a stainless steel-resin composite. The stainless steel-resin composite may be prepared by the method mentioned above and comprise: a stainless steel substrate having a porous surface, and a resin layer disposed on the porous surface of the stainless steel substrate.

With the method of preparing the stainless steel-resin composite according to embodiments of the present disclosure, some aluminum particles may be implanted in the surface layer of the stainless steel substrate due to a high temperature a high speed of the thermal spraying. After the stainless steel substrate is dipped into the alkaline solution, the aluminum particles may be removed and a plurality of unique and irregular eroded pores may be left, and a porous surface may be formed. The plurality of eroded pores in the porous surface may have irregular and unique structure, which may benefit improving the adhesive strength between the stainless steel and the resin, and injection molding of the resin composition may become easier without any particular requirements of the resin compositions, which may broaden the application of the method according to embodiments of the present disclosure.

In addition, the aluminum particles may be selectively sprayed onto special area of the surface of the stainless steel substrate. That is, the aluminum particles may be only sprayed onto a first part of the surface that need to be injected with the resin composition. For example, the second part (the left part) of the surface of the stainless steel substrate, which doesn't need to be injected with the resin composition, may be covered by a mould, thus, the second part of the surface may be prevent from being implanted with the aluminum particles. Moreover, the alkaline solution having a pH greater than or equal to 10 may not corrode the second part of the surface, therefore the appearance of the second part of the surface and the dimension of the stainless steel substrate may not be affected. Furthermore, heat released during the production process is low which may not influence the appearance of the stainless steel substrate. There is no pollution to the environment, and the process is simple, thus the method of preparing a stainless steel-resin composite according to the present disclosure may be suitable for mass production.

Additional aspects and advantages of embodiments of present disclosure will be given in part in the following descriptions, become apparent in part from the following descriptions, or be learned from the practice of the embodiments of the present disclosure.

### DETAILED DESCRIPTION

Reference will be made in detail to embodiments of the present disclosure; samples of described embodiments are indicated in the drawings. The embodiments described herein with reference to drawings are explanatory, illustrative, and used to generally understand the present disclosure. The embodiments shall not be construed to limit the present disclosure.

According to a first aspect of the present disclosure, there is provided a method for preparing a stainless steel-resin composite. The method may comprise steps of: providing a stainless steel substrate; spraying aluminum particles onto a first surface of the stainless steel substrate via thermal spraying to form an aluminum layer on the first surface of the stainless steel substrate; removing the aluminum layer via dipping the stainless steel substrate into an alkaline solution with a pH value greater than or equal to 10 so as to form a porous surface; and injecting a resin composition onto the porous surface of the stainless steel substrate to form a resin layer.

It should be noted that the spraying step may be performed on partial surface of the stainless steel substrate, such as, the part surface which needs to be injected with the resin composition. In one embodiment, the thermal spraying step comprises: spraying an aluminum particles on a first part of the surface of the stainless steel substrate. Therefore, the second part of the surface of the stainless steel substrate may not be influenced, and then the second part of the surface won't need to be subsequently treated with polishing or CNC machining or other processing. In this embodiment, the second part of the surface of the stainless steel substrate, which doesn't need to be injected with the resin composition, may be covered by a mould. For example, the stainless steel substrate could be placed into a designed mould which could cover the second part of the surface of the stainless steel substrate, then the mould may be placed in a thermal spraying equipment for thermal spraying, therefore the aluminum particles could be only sprayed onto the first part of the surface of the stainless steel substrate.

In some embodiments, a particles feed rate of the thermal spraying is 30g/minute to 100g/minute, preferably 60g/minute to 80g/minute.

In some embodiments, a spraying distance (the distance between the source of the thermal spraying and the surface of the stainless steel substrate) of the thermal spraying is 300 millimeters to 420 millimeters, preferably 340 millimeters to 390 millimeters.

In some embodiments, a temperature of the thermal spraying is 2000 Celsius degrees to 5000 Celsius degrees, preferably 2600 Celsius degrees to 3000 Celsius degrees. The temperature could be controlled by regulating a flow rate of kerosene and oxygen. By adjusting the temperature in the above scope, more aluminum particles may implanted in the surface layer of stainless steel substrate much deeper to form a better surface structure that may improve the adhesive force between the stainless steel substrate and the resin composition.

There are no particular limitations for the thermal spraying. In some embodiments, the thermal spraying comprises at least one selected from arc spraying, plasma spraying and hypersonic flame spraying. Considering that the equipment and operation technique are well known by those skill in the art, the details for these thermal spraying method are omitted herein.

In one embodiment, the aluminum layer on the stainless steel substrate has a thickness of 100 µm to 400 µm. In one other embodiment, the aluminum layer adhered on the stainless steel substrate has a thickness of 150 µm to 200 µm. which may not only decrease consumption of the raw material and cost but also be benefit for the subsequent treatment and then further optimize the performance of the stainless steel-resin composite.

In some embodiments, the aluminum particles have an average diameter of 30 µm to 50 µm, and a purity of greater than 99wt%. The aluminum particles are commercially available.

In embodiments of the present disclosure, the stainless steel substrate is allowed to cool-down to room temperature after the spraying step. For example, the stainless steel substrate may be taken out of the spraying equipment and rested at room temperature for 0.5 hours to 12 hours for cooling-down.

In embodiments of the present disclosure, after the spraying step, some aluminum particles may be implanted into the surface layer of the stainless steel substrate, and some aluminum particles may be disposed on the aluminum particles that implanted into the surface layer of the stainless steel substrate.

In one embodiment, a pH of the alkaline solution is greater than 12 and less than 14.By dipping the stainless steel substrate into an alkaline solution, the aluminum layer may be removed, then a porous surface having a plurality of eroded pores are formed.

In some embodiments, the alkaline solution comprises at least one selected from soluble carbonate solution, soluble alkali solution, soluble phosphate solution, soluble sulphate solution and soluble borate solution. For example, the alkaline solution comprises at least one selected from Na₂CO₃ solution, NaHCO₃ solution, NaOH solution, Na₂HPO₄ solution, Na₃PO₄ solution, KOH solution, KHCO₃ solution, K₂CO₃ solution, Na₂SO₃ and K₃PO₄ solution. In some embodiments, the Na₂CO₃ solution has a mass concentration of 5wt% to 20wt%, the NaHCO₃ solution has a mass concentration of 5wt% to 20wt%, the NaOH solution has a mass concentration of 5wt% to 20wt%, the Na₂HPO₄ solution has a mass concentration of 5wt% to 20wt%, the Na₃PO₄ solution has a mass concentration of 5wt% to 20wt%, the KOH solution has a mass concentration of 5wt% to 20wt%, the KHCO₃ solution has a mass concentration of 5wt% to 20wt%, the K₂CO₃ solution has a mass concentration of 5wt% to 20wt%, the Na₂SO₃ has a mass concentration of 5wt% to 20wt%₃ and the K₃PO₄ solution has a mass concentration of 5wt% to 20wt%. In some embodiments, the alkaline solution comprises at least one selected from NaOH solution having a mass concentration of 5wt% to 20wt%, KOH solution having a mass concentration of 5wt% to 20wt%, Na₂CO₃ solution having a mass concentration of 5wt% to 20wt%, and K₃PO₄ solution having a mass concentration of 5wt% to 20wt%.In some other embodiments, the alkaline solution is at least one selected from a group consisting of NaOH solution having a mass concentration of 5wt% to 15wt%, KOH solution having a mass concentration of 5wt% to 15wt%, Na₂CO₃ solution having a mass concentration of 5wt% to 15wt%, and K₃PO₄ solution having a mass concentration of 5wt% to 15wt%. The aluminum layer may be removed quickly, and the stainless steel substrate may not be affected by the alkaline solution, and the eroded pores formed on the surface of the stainless steel may have an excellent pore structure which may further optimize the binding property between resin composition and stainless steel substrate. The stainless steel-resin composite obtained may have a better tensile strength and the integration combination between stainless steel and resin composition is better.

In one embodiment, the stainless steel substrate is dipped into the alkaline solution under a temperature of 10 Celsius degrees to 80 Celsius degrees, preferably 30 Celsius degrees to 70 Celsius degrees, for 10 minutes to 120 minutes, preferably for 10 minutes to 60 minutes.

In some embodiments, the stainless steel substrate is dipped into the alkaline solution for more than one time, and the method further comprises washing the stainless steel substrate with deionized water after each dipping. In one embodiment, the stainless steel substrate is dipped for 2 times to 5 times.

In embodiments of the present disclosure, the plurality of eroded pores is irregular eroded pores. Those pores have a unique structure which may improve the adhesion force between the stainless steel substrate and the resin composition that injected into these pores.

Specifically, the injecting step may be carried out by putting the stainless steel substrate having a porous surface into a mould, and injecting a resin composition onto the porous surface and integrating the resin composition with the stainless steel substrate to obtain the stainless steel-resin composite.

Those with ordinary skill in the art will appreciate that, injecting a resin composition onto the porous surface of the stainless steel substrate to form the stainless steel-resin composite is only one particular embodiment of the present disclosure, and any other integration method may be applied to form the stainless steel-resin composite without departing from the scope of the disclosure.

In some embodiment, the step of injecting a resin composition onto the porous surface is carried out under the following condition: a nozzle temperature of 200 Celsius degrees to 350 Celsius degrees; mold temperature of 50 Celsius degrees to 200 Celsius degrees. In some embodiments, a weight of the resin composition injected is 0.1 gram to 1000 gram. After the step of injecting is carried out, a resin layer may be formed on surface of the stainless steel substrate, the resin layer may have a thickness of 0.1 millimeters to 10 millimeters.

In some embodiments, the method further comprises a step of pretreating the first surface of the stainless steel substrate before spraying aluminum particles thereon. The pretreating method may be any commonly-used pretreating process that known to person skilled in the art, which generally includes steps of: polishing the metal substrate to remove obvious foreign matters on the surfaces of the stainless steel substrate, and then removing the oil adhered on the surface of the stainless steel substrate and cleaning the stainless steel substrate. In one embodiment, the pretreating method comprises: polishing, for example, polishing the surface of the stainless steel substrate with a 100-400 mesh sand paper or a polishing machine to form pores with micron scale on the surface of the stainless steel substrate; removing oil, first water-washing, abrasive blasting, second water-washing, and drying at a temperature of 60 Celsius degrees to 80 Celsius degrees. The oil may be removed by using different kinds of common solvent, such as ethyl alcohol or acetone, and then washing the stainless steel substrate for 0.5 hours to 2 hours. In one embodiment, after the oil has been removed by using absolute ethyl alcohol and washed with water, the stainless steel substrate is abrasive blasted, which may increase the erosion depth of the aluminum particles during thermal spraying step, and then washed with deionized water and dried at a temperature of 60 Celsius degrees to 80 Celsius degrees.

There are no particular limitations for the stainless steel substrate, and it could be any commonly-used stainless steel substrate which is commercially available. Also there are no particular limitations for shape and structure of the stainless steel substrate, the shape and structure of the stainless steel substrate could be obtained through mechanical treatment.

According to some embodiments of the present disclosure, there are no particular limitations for the resin composition. The resin composition can be any resin composition which can combine with a stainless steel substrate to form a stainless steel-resin composite.

In one embodiment, the resin composition includes a thermoplastic resin.

In some embodiments, the thermoplastic resin comprises a matrix resin and a polyolefin resin. In some embodiments, the matrix resin is a non-crystalline resin. By using the non-crystalline resin as the matrix resin, which surface gloss and toughness may be higher than the high crystalline resins in the prior arts, associated with the polyolefin resin having a melting point of 65 Celsius degrees to 105 Celsius degrees, it is not a requirement for the injecting process to be carried out with a specified mold temperature, thus the injecting process is simplified, and the stainless steel-resin composite obtained may have a better mechanical strength and surface characteristics that may solve the problems in surface decorating for satisfying variety demand from consumers.

Further, by using the resin composition of the non-crystallize resin (matrix resin) associated with the polyolefin resin having a melting point of 65 Celsius degrees to 105 Celsius degrees, it facilitates the resin composition to flow into nano-scale pores (the eroded pores), thus the stainless steel-resin composite obtained may have an excellent adhesion force and mechanical strength between the resin layer and the stainless steel substrate.

In one embodiment of the present disclosure, based on 100 weight parts of the thermoplastic resin, the thermoplastic resin comprises 70 weight parts to 95 weight parts of the matrix resin and 5 weight parts to 30 weight parts of the polyolefin resin.

In some embodiments, the thermoplastic resin may comprise fluidity modifier, preferably, a ring polyester. By using the fluidity modifier, the fluidity of the thermoplastic resin may be improved so as to facilitate the following injection molding step, thus the adhesion force between the resin composition and the stainless steel substrate may be improved accordingly. Preferably, based on 100 weight parts of the thermoplastic resin, the thermoplastic resin comprises 1 weight part to 5 weight parts of the fluidity modifier.

According to the present disclosure, the matrix resin is a non-crystalline resin. In some embodiments, the matrix resin includes a mixture of polyphenylene oxide (PPO) and polyphenylene sulfide (PPS). In one embodiment, a weight ratio of the PPO to the PPS is 3:1 to 1:3, preferably 2:1 to 1:1.

In some embodiments, the matrix resin includes a mixture of PPO and polyamide (PA). In one embodiment, a weight ratio of the PPO to the PA is 3:1 to 1:3, preferably 2:1 to 1:1.

In some embodiments, the matrix resin includes a polycarbonate. There are no particular limitations for the polycarbonate, for example, the polycarbonate could be various kinds of straight chain polycarbonate.

According to some embodiments of the present disclosure, the polyolefin resin has a melting point of 65 Celsius degrees to 105 Celsius degrees. In one embodiment, the polyolefin resin includes a grafted polyethylene. In one other embodiment, the grafted polyethylene has a melting point of 100 Celsius degrees or 105 Celsius degrees.

According to some embodiments of the present disclosure, the resin composition may comprise other additives. The additives may be selected depending on practical requirements, without particular limitations. For example, in one embodiment, in order to endue the resin composition with a demand linear expansion coefficient, the resin composition further comprises a filler. The filler can be any common filler that known to a person skilled in the art, such as a fiber filler or an inorganic particles filler. In some embodiments, the fiber filler comprises at least one selected from glass fiber, carbon fiber and aromatic polyamide fiber, and the inorganic particles filler comprises at least one selected from a group consisting of silicon dioxide, talcum particles, aluminum hydroxide, magnesium hydroxide, calcium carbonate, magnesium carbonate, heavy barium sulfate, glass and kaolin. In some embodiments, in order to endue the resin composition with a linear expansion coefficient in the lateral and longitudinal direction similar to that of the stainless steel substrate, the matrix resin may comprise 50 weight parts to 150 weight parts of the fiber filler, and 50 weight parts to 150 weight parts of the inorganic particles filler, based on 100 weight parts of the matrix resin.

According to the method of preparing the stainless steel-resin composite of present disclosure, the resin composition is formed by mixing or blending the matrix resin and the polyolefin resin. The mixing or blending method of forming the resin composition may be a common method that known to a person skilled in the art, for example, the matrix resin and the polyolefin resin are mixed uniformly and then extruded by a double-screw extruder to form the resin composition.

With the method of preparing the stainless steel-resin composite according to embodiments of present disclosure, the production process is simplified, and the production time for the stainless steel-resin composite is shortened, when compared with the prior arts. In addition, the stainless steel-resin composite according to embodiments of the present disclosure may have a better adhesion force between the resin composition and the stainless steel substrate, and a better tensile shear strength when compared with the prior arts.

According to a second aspect of the present disclosure, there is provided a stainless steel-resin composite prepared by the method mentioned above. The stainless steel-resin composite comprises: a stainless steel substrate having a porous surface, and a resin layer disposed on the porous surface of the stainless steel substrate. The resin layer comprises a resin composition, and there are no particular limitations for the resin composition; the resin composition can be any resin composition which can form a stainless steel-resin composite with a stainless steel substrate.

The stainless steel-resin composite according to embodiments of the present disclosure may be used directly, or may be subjected to some subsequent treatments, such as CNC machining or spraying so as to use in other applications according to practical requirements.

The disclosure will be further described below by way of examples.

### Example 1

### 1) Pretreatment

A stainless steel plate (series 304) having a thickness of 1 mm was cut into 15mm^{∗}80mm rectangular pieces. Then these pieces of stainless steel plate were polished with a polishing machine. After being polished, these pieces of stainless steel plate were washed with absolute ethyl alcohol. Then, these pieces of absolute ethyl alcohol were abrasive blasted, and then washed with deionized water and dried at 80 Celsius degrees.

### 2) Surface treatment

After that, in order to cover the non-injected area, these pieces of stainless steel plate were placed in a mould, and a 15mm^{∗}5mm area on one end of the stainless steel plate is uncovered by the mould. Then the mould was placed in a supersonic spraying machine to thermal spray aluminum particles having a purity of 99.5wt% and an average diameter of 30 microns on the uncovered surface of the stainless steel substrate, with a kerosene flow rate of 22L/h, an oxygen flow rate of 930L/minute, a particles feed rate of 75g/minute, and a spraying distance of 370 millimeters. An aluminum layer formed on the uncovered surface of the stainless steel plate has a thickness of 100 µm. Then these pieces of stainless steel plate were taken out of the supersonic spraying machine and rested at room temperature for 2 hours for completely cooling-down. And then these pieces of stainless steel plate were dipped into a 20wt% NaOH solution at 30 Celsius degrees for 1 hour until the aluminum particles adhered on the stainless steel plate were fully dissolved and left a porous surface, then these pieces of stainless steel plate were taken out to be washed with water and dried at 80 Celsius degrees.

### 3) Molding

At last, these dried pieces of stainless steel plate were inserted into injection molding mould respectively, and then PPS rein composition (comprising 20 wt% of glass fiber) was injected onto the porous surface of the stainless steel plate. After these pieces of stainless steel plate being removed from the moulds, and cooling down, stainless steel-resin composite S1 was obtained.

### Example 2

The method for preparing a stainless steel-resin composite of Example 2 comprises substantially the same steps as Example 1 except the following differences: in the step 2), the aluminum particles had an average diameter of 50 µm. A stainless steel-resin composite S2 was obtained.

### Example 3

The method for preparing a stainless steel-resin composite of Example 3 comprises substantially the same steps as Example 1 except the following differences: in the step 2), the aluminum layer formed on surface the stainless steel plate had a thickness of 200 µm. A stainless steel-resin composite S3 was obtained.

### Example 4

The method for preparing a stainless steel-resin composite of Example 4 comprises substantially the same steps as Example 1 with the following differences: in the step 2), the particles feed rate was 100g/minute. A stainless steel-resin composite S4 was obtained.

### Example 5

The method for preparing a stainless steel-resin composite of Example 5 comprises substantially the same steps as Example 1 except the following differences: in the step 2), the spraying distance was 320 millimeters. A stainless steel-resin composite S5 was obtained.

### Comparative Example 1

### 1) Pretreatment

A stainless steel plate (series 304) having a thickness of 1 mm was cut into 15mm^{∗}80mm rectangular pieces. Then these pieces of stainless steel plate were polished with a polishing machine. After being polished, these pieces of stainless steel plate were washed with absolute ethyl alcohol. Then, these pieces of absolute ethyl alcohol were abrasive blasted, and then washed with deionized water and dried at 80 Celsius degrees.

### 2) Surface treatment

After that, these pieces of stainless steel plate were placed in a 20wt% NaOH solution at 30 Celsius degrees for 1 hour. Then these pieces of stainless steel plate were taken out of the NaOH solution, and washed with water and dried at 80 Celsius degrees.

### 3) Molding

At last, these pieces of stainless steel plate were inserted into injection molding mould, and then these pieces of stainless steel plate were injected molding with a PPS rein composition (comprising 20 wt% of glass fiber). Then these pieces of stainless steel plate were removed from the moulds, and cooled, obtaining a stainless steel-resin composite DS1.

### Comparative Example 2

### 1) Pretreatment

A stainless steel plate (series 304) having a thickness of 1 mm was cut into 15mm^{∗}80mm rectangular pieces. Then these pieces of stainless steel plate were polished with a polishing machine. After being polished, these pieces of stainless steel plate were washed with absolute ethyl alcohol. Then, these pieces of absolute ethyl alcohol were abrasive blasted, and then washed with deionized water and dried at 80 Celsius degrees.

### 2) Surface treatment

After the step 1), these pieces of stainless steel plate were placed in a 10wt% H₂SO₄ solution at 70 Celsius degrees for 1 hour, then taken out of the H₂SO₄ solution, and washed with water and dried at 80 Celsius degrees.

### 3) Molding

These pieces of stainless steel plate after the step 2) were inserted into injection molding mould, and then these pieces of stainless steel plate were injected molding with a PPS rein composition (comprising 20 wt% of glass fiber). Then these pieces of stainless steel plate were removed from the moulds, and cooled, obtaining a stainless steel-resin composite DS2.

### Performance test

### 1) Adhesion force:

These stainless steel-resin composite S1-S5 and DS1, DS2 were fixed on a universal material testing machine to perform tensile test. The shear fracture force of the test results were considered as an adhesion force between the stainless steel plate and the resin. The test results were shown in Table 1.

### 2) Appearance of non-injected area (surface of the stainless steel substrate which doesn't need to be to be injected with the resin composition):

These stainless steel-resin composite S1-S5 and DS1, DS2 were observed under a standard light condition D65, comparing with an untreated stainless steel plate S0. The distance between samples and eyes was 30 centimeters. The observe results wee recorded in Table 1.

**Table 1**

| | Shear fracture force/MPa | Appearance of non-injected area |
|---|---|---|
| S1 | 10.12 | No obvious change |
| S2 | 8.84 | No obvious change |
| S3 | 9.28 | No obvious change |
| S4 | 8.556 | No obvious change |
| S5 | 8 | No obvious change |
| DS1 | fall off after injecting | No obvious change |
| DS2 | 8.41 | Obvious corrosion, coarse and shineless |

With the stainless steel-resin composite according to the present disclosure, the stainless steel-resin composite had a good adhesion force between the stainless steel and the resin. And there were no particular requirements the resin composition, thus the stainless steel-resin composite may have wider applications.

In addition, the aluminum particles may be selectively sprayed onto the special area of the surface of the stainless steel substrate, that is, the aluminum particles may be only sprayed on an the first part of the surface that to be boned with resin composition, while the second part of the surface may be covered with a mould. Thus, the second part surface may be prevented from being implanted with the aluminum particles. Moreover, the alkaline solution may not corrode the second part of the surface; therefore the appearance of the second part of the surface and the dimension of the stainless steel substrate may not be affected. Furthermore, heat released during the production process is low, which may not influence the appearance of the stainless steel substrate. And also, there is no pollution to the environment, and the process is simple, thus the method of preparing a stainless steel-resin composite according to the present disclosure may suitable for mass production.

## Claims

1. A method of preparing a stainless steel-resin composite, comprising steps of:
providing a stainless steel substrate;
spraying aluminum particles onto a first surface of the stainless steel substrate via thermal spraying to form an aluminum layer on the first surface of the stainless steel substrate;
removing the aluminum layer via dipping the stainless steel substrate into an alkaline solution with a pH value greater than or equal to 10 so as to form a porous surface; and
injecting a resin composition onto the porous surface of the stainless steel substrate to form a resin layer.

2. The method according to claim 1, wherein a particles feed rate of the thermal spraying is 30g/minute to 100g/minute, and a spraying distance of the thermal spraying is 300 mm to 420 mm.

3. The method according to claim 1 or 2, wherein the thermal spraying comprise at least one selected from arc spraying, plasma spraying and hypersonic flame spraying.

4. The method according to any one of claims 1 to 3, wherein the aluminum layer has a thickness of 100 µm to 400 µm.

5. The method according to any one of claims 1 to 4, wherein the aluminum particles has an average diameter of 30 µm to 50 µm, and a purity of greater than 99wt%.

6. The method according to any one of claims 1 to 5, wherein the alkaline solution comprises at least one selected from a group consisting of Na₂CO₃ solution, NaHCO₃ solution, NaOH solution, Na₂HPO₄ solution, Na₃PO₄ solution, KOH solution, KHCO₃ solution, K₂CO₃ solution, Na₂SO₃ and K₃PO₄ solution.

7. The method according to any one of the preceding claims, further comprising the following step:
pretreating the first surface of the stainless steel substrate via polishing, removing oil, first water-washing, abrasive blasting, second water-washing, and drying at a temperature of 60 Celsius degrees to 80 Celsius degrees prior to the spraying step.

8. The method according to any one of the preceding claims, wherein the resin composition includes a thermoplastic resin composition.

9. The method according to claim 8, wherein the thermoplastic resin composition comprises a matrix resin and a polyolefin resin.

10. The method according to claim 9, wherein the matrix resin includes a mixture of polyphenyl ether and polyphenylene sulfide or a mixture of polyphenyl ether and polyamide.

11. The method according to claim 13, wherein a weight ratio of the polyphenyl ether to the polyphenylene sulfide or polyamide is 3:1 to 1:3.

12. The method according to claim 9, wherein the matrix resin includes a polycarbonate.

13. The method according to claim 9, wherein based on 100 weight parts of the thermoplastic resin, the thermoplastic resin comprises 70 weight parts to 95 weight parts of the matrix resin and 5 weight parts to 30 weight parts of the polyolefin resin.

14. The method according to claim 9, wherein the polyolefin resin has a melting point of 65 Celsius degrees to 105 Celsius degrees.

15. A stainless steel-resin composite prepared by any one of the preceding claims, comprising:
a stainless steel substrate having a porous surface, and
a resin layer disposed on the porous surface of the stainless steel substrate.

## Patentansprüche

1. Verfahren zur Herstellung eines Edelstahl-Harz-Verbundstoffes, umfassend die folgenden Schritte:
Bereitstellen eines Edelstahlsubstrats;
Aufspritzen von Aluminiumpartikeln auf eine erste Oberfläche des Edelstahlsubstrats durch thermisches Spritzen, um eine Aluminiumschicht auf der ersten Oberfläche des Edelstahlsubstrats zu bilden;
Entfernen der Aluminiumschicht durch Eintauchen des Edelstahlsubstrats in eine alkalische Lösung mit einem pH-Wert, der höher als oder gleich 10 ist, um eine poröse Oberfläche zu bilden; und Einspritzen einer Harzzusammensetzung auf die poröse Oberfläche des Edelstahlsubstrats, um eine Harzschicht zu bilden.

2. Verfahren nach Anspruch 1, wobei eine Partikel-Vorschubrate des thermischen Spritzens 30g/Minute bis 100g/Minute beträgt, und ein Spritzabstand des thermischen Spritzens 300 mm bis 420 mm beträgt.

3. Verfahren nach Anspruch 1 oder 2, wobei das thermische Spritzen mindestens eines ausgewählt aus Lichtbogenspritzen, Plasmaspritzen und Hyperschall-Flammspritzen umfasst.

4. Verfahren nach einem der Ansprüche 1 bis 3, wobei die Aluminiumschicht eine Dicke von 100 µm bis 400 µm aufweist.

5. Verfahren nach einem der Ansprüche 1 bis 4, wobei die Aluminiumpartikel einen durchschnittlichen Durchmesser von 30 µm bis 50 µm und eine Reinheit, die größer als 99 Gew.-% ist, aufweist.

6. Verfahren nach einem der Ansprüche 1 bis 5, wobei die alkalische Lösung mindestens eines ausgewählt aus der Gruppe bestehend aus Na₂CO₃-Lösung, NaHCO₃-Lösung, NaOH-Lösung, Na₂HPO₄-Lösung, Na₃PO₄-Lösung, KOH-Lösung, KHCO₃-Lösung, K₂00₃-Lösung, Na₂SO₃-Lösung und K₃PO₄-Lösung umfasst.

7. Verfahren nach einem der vorangehenden Ansprüche, ferner umfassend den folgenden Schritt:
Vorbehandeln der ersten Oberfläche des Edelstahlsubstrats durch Polieren, Entölen, erstes Waschen mit Wasser, Druckluftstrahlen, zweites Waschen mit Wasser, und Trocknen bei einer Temperatur von 60 Grad Celsius bis 80 Grad Celsius vor dem Schritt des Spritzens.

8. Verfahren nach einem der vorangehenden Ansprüche, wobei die Harzzusammensetzung eine thermoplastische Harzzusammensetzung enthält.

9. Verfahren nach Anspruch 8, wobei die thermoplastische Harzzusammensetzung ein Matrixharz und ein Polyolefinharz umfasst.

10. Verfahren nach Anspruch 9, wobei das Matrixharz eine Mischung aus Polyphenylether und Polyphenylensulfid oder eine Mischung aus Polyphenylether und Polyamid enthält.

11. Verfahren nach Anspruch 13, wobei ein Gewichtsverhältnis des Polyphenylethers zum Polyphenylensulfid oder Polyamid 3:1 bis 1:3 beträgt.

12. Verfahren nach Anspruch 9, wobei das Matrixharz ein Polycarbonat enthält.

13. Verfahren nach Anspruch 9, wobei basierend auf 100 Gewichtsteilen des thermoplastischen Harzes das thermoplastische Harz 70 Gewichtsteile bis 95 Gewichtsteile des Matrixharzes und 5 Gewichtsteile bis 30 Gewichtsteile des Polyolefinharzes umfasst.

14. Verfahren nach Anspruch 9, wobei das Polyolefinharz einen Schmelzpunkt von 65 Grad Celsius bis 105 Grad Celsius aufweist.

15. Edelstahl-Harz-Verbundstoff, hergestellt nach einem der vorangehenden Ansprüche, umfassend:
ein Edelstahlsubstrat mit einer porösen Oberfläche, und
eine auf der porösen Oberfläche des Edelstahlsubstrats angeordnete Harzschicht.

## Revendications

1. Procédé de préparation d'un composite acier inoxydable-résine comprenant les étapes consistant à :
se munir d'un substrat en acier inoxydable ;
pulvériser des particules d'aluminium par projection thermique sur une première surface du substrat en acier inoxydable pour former une couche d'aluminium sur la première surface du substrat en acier inoxydable ;
éliminer la couche d'aluminium par immersion du substrat en acier inoxydable dans une solution alcaline ayant une valeur de pH égale ou supérieure à 10 pour former une surface poreuse ; et
injecter une composition résineuse sur la surface poreuse du substrat en acier inoxydable pour former une couche résineuse.

2. Procédé selon la revendication 1, où une vitesse de pulvérisation des particules lors de la projection thermique va de 30 g/minute à 100 g/minute et une distance de pulvérisation lors de la projection thermique va de 300 mm à 420 mm.

3. Procédé selon la revendication 1 ou 2, où la projection thermique comprend une au moins sélectionnée parmi la projection à l'arc, la projection au plasma et la projection à la flamme supersonique.

4. Procédé selon l'une quelconque des revendications 1 à 3, où la couche d'aluminium a une épaisseur qui va de 100 µm à 400 µm.

5. Procédé selon l'une quelconque des revendications 1 à 4, où les particules d'aluminium ont un diamètre moyen qui va de 30 µm à 50 µm et une pureté dépassant 99 % en poids.

6. Procédé selon l'une quelconque des revendications 1 à 5, où la solution alcaline comprend une au moins sélectionnée parmi une solution de Na₂CO₃, une solution de NaHCO₃, une solution de NaOH, une solution de Na₂HPO₄, une solution de Na₃PO₄, une solution de KOH, une solution de KHCO₃, une solution de K₂CO₃, une solution de Na₂SO₃ et une solution de K₃PO₄.

7. Procédé selon l'une quelconque des revendications précédentes comprenant en outre l'étape suivante consistant à :
prétraiter la première surface du substrat en acier inoxydable par polissage, élimination de l'huile, premier lavage à l'eau, grenaillage, deuxième lavage à l'eau et séchage à une température qui va de 60 degrés Celsius à 80 degrés Celsius avant l'étape de pulvérisation.

8. Procédé selon l'une quelconque des revendications précédentes, où la composition résineuse inclut une composition résineuse thermoplastique.

9. Procédé selon la revendication 8, où la composition résineuse thermoplastique comprend une résine matricielle et une résine polyoléfinique.

10. Procédé selon la revendication 9, où la résine matricielle inclut un mélange de polyphényléther et de poly(sulfure de phénylène) ou un mélange de polyphényléther et de polyamide.

11. Procédé selon la revendication 13, où un rapport en poids entre le polyphényléther et le poly(sulfure de phénylène) ou le polyamide va de 3:1 à 1:3.

12. Procédé selon la revendication 9, où la résine matricielle inclut un polycarbonate.

13. Procédé selon la revendication 9, où la résine thermoplastique comprend de 70 parties en poids à 95 parties en poids de la résine matricielle et de 5 parties en poids à 30 parties en poids de la résine polyoléfinique pour 100 parties en poids de la résine thermoplastique.

14. Procédé selon la revendication 9, où la résine polyoléfinique a un point de fusion qui va de 65 degrés Celsius à 105 degrés Celsius.

15. Composite acier inoxydable-résine préparé conformément à l'une quelconque des revendications précédentes, comprenant :
un substrat en acier inoxydable ayant une surface poreuse et
une couche résineuse située sur la surface poreuse du substrat en acier inoxydable.
